# EUROPEAN PATENT APPLICATION

(11) **EP 0 834 720 A1**
(43) Date of publication of application: **08.04.1998**
(21) Application number: 97307618.5
(22) Date of filing: 29.09.1997
(51) Int. Cl.: G01F 1/00

(54) **Flow detector**

(30) Priority: 01.10.1996 GB 9620466
(71) Applicant: THAMES WATER UTILITIES LIMITED, Reading Berks. RG1 8DB (GB)
(72) Inventor: Ockleston, Grant Andrew, Heston TN5 9LQ (GB)
(74) Representative: Johnson, Terence Leslie

(57) **Abstract**

The invention relates to a flow determining device 1, comprising an elongate stick or baton-like body 2 adapted for suspension from one end in a pipe or conduit 3 for determining flow parameters of fluid, in the embodiment sewage 'S' flowing through the conduit (or pipe) 3, the body 2 carrying sensor means in the form of a plurality of sensors 4 for detecting at least one fluid flow parameter. The body 2 is freely pivotably mounted at its upper (in use) end in the pipe 3 being held in position by 'O'-rings 5, the pivot mounting 6 including the 'O'-rings being arranged so that the body 2 always swings in a single plane in the pipe or conduit 3.

## Description

The invention relates to a flow detector, particularly a flow determining device used to determine flow parameters of a fluid such as sewage.

It is often necessary to monitor volume flow rate of a fluid, particularly of liquid such as sewage. This is because flow of the sewage is or can be sensitive, particularly if it is discharging into a holding well or water way. A small change in the flow can alter the whole manner of operation of a sewage works for example, which could then lead to expensive waste of time and chemicals used in fluid treatment, and also the balance of sewage to the water way can be upset. Prior methods of detecting changes in fluid flow are usually manual, and thus expensive, or include complicated arrangements such as bubblers to detect depth. This is also expensive and prone to error.

It is accordingly an object of the invention to seek to mitigate these disadvantages.

According to a first aspect of the invention there is provided a flow determining device, comprising an elongate body adapted for suspension in a fluid whose flow is to be determined, and sensor means carried by the body for detecting at least one parameter of the fluid.

The body may be adapted for pivotal mounting in a fluid flow. This provides for a positive response.

The sensor means may be adapted for detecting at least two parameters. This provides for provision of a comprehensive flow profile.

According to a second aspect of the invention there is provided a system for determining flow parameters of a fluid, comprising a flow determining device as hereinbefore defined, and data logger means responsive to an output from the sensor means.

The body may be movable in substantially a single plane. This provides for a positive response and consistent output.

The body may be pivotably mounted in a conduit for the fluid. This again provides for a positive response, and repeatability in operation.

The data logger means may be remote from the device. This provides for relative simplicity in operation.

The fluid may be a liquid and the conduit may have an access means in which the data logger is mounted. This again provides for simplicity of operation, particularly where the access means may comprise a manhole.

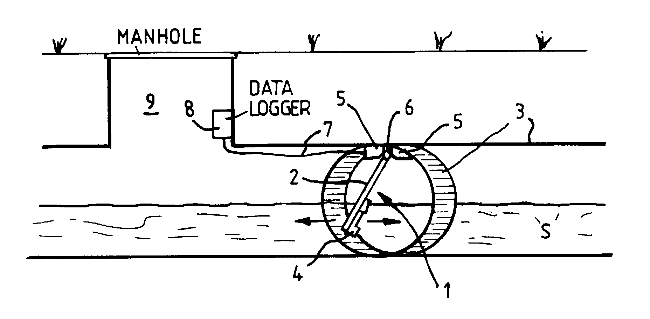

A flow determining device is hereinafter described, by way of example, with reference to the accompanying drawing, which shows schematically a pipe for a fluid such as sewage with a device according to the invention installed therein.

Referring to the drawing in which the shaded part shows a perspective view of a pipe or conduit to illustrate the invention, the rest of the pipe or conduit being shown in longitudinal section, there is shown a flow determining device 1, comprising an elongate stick or baton-like body 2 adapted for suspension from one end in a pipe or conduit 3 for determining flow parameters of fluid, in the embodiment sewage 'S' flowing through the conduit (or pipe) 3, the body 2 carrying sensor means in the form of a plurality of sensors 4 for detecting at least one fluid flow parameter. The body 2 is freely pivotably mounted at its upper (in use) end in the pipe 3 being held in position by 'O'-rings 5, the pivot mounting 6 including the 'O'-rings being arranged so that the body 2 always swings in a single plane in the pipe or conduit 3. The sensors 4, which may be electrical or electronic sensors, are responsive to at least the angle of inclination of the body 2 as brought about by the flow of the sewage 'S', and the depth of immersion of the body 2 in the sewage 'S', signals generated by the sensors 4 being passed along suitable electrical connections 7, or by radio or other signals, to a data logger 8 which is conveniently remotely situated with respect to the conduit or pipe 3, in the embodiment in an access point 9, such as a manhole connected with the pipe 3. The data generated by the sensors 4 and logged by the data logger 8 is used within a mathematical algorithm to determine flow of the sewage 'S' along the pipe 3.

The sensor means 4 may be a single sensor programmed to detect certain specific and discrete parameters of the fluid, or a plurality of discrete sensors, each being responsive to a particular parameter of the fluid flow.

Thus using the invention, it is possible to determine flow parameters in for example all kinds of sewerage and drainage systems. The body moves relative to the flow and, being freely suspended, responds positively to flow changes, thereby providing an essentially universal technique for monitoring all flow events in a pipeline. The data generated can be used to control operation of say a sewerage works.

## Claims

1. A flow determining device, characterised by an elongate body (2) adapted for suspension in a fluid (5) whose flow is to be determined, and by sensor means (4) carried by the body (2) for detecting at least one parameter of the fluid.

2. A device according to Claim 1, characterised by the body (2) being adapted for pivotal mounting (6) in a fluid flow.

3. A device according to Claim 1 or Claim 2, characterised by the sensor means (4) being adapted for detecting at least two parameters of the fluid flow.

4. A system for determining flow parameters of a fluid, characterised by a flow determining device (4) according to any preceding claim, and by data logger means (8) responsive to an output from the sensor means (4).

5. A system according to Claim 4, characterised by the body (2) being movable in substantially a single plane.

6. A system according to Claim 5, characterised by the body (4) being pivotably mounted in a conduit (3) for the fluid.

7. A system according to Claim 6, characterised by the data logger means (8) being remote from the device (2).

8. A system according to Claim 7, characterised by the fluid being a liquid and the conduit (3) having an access means (9) in which the data logger (8) is mounted.

9. A system according to Claim 8, characterised by the access means (9) comprising a manhole.
